# EUROPÄISCHE PATENTSCHRIFT

(11) **EP 3 181 918 B1**
(45) Veröffentlichungstag und Bekanntmachung des Hinweises auf die Patenterteilung: **29.05.2019**
(21) Anmeldenummer: 15199984.4
(22) Anmeldetag: 15.12.2015
(51) Int. Cl.: F16B 35/06

(54) **BEFESTIGUNGSANORDNUNG**
MOUNTING ASSEMBLY
DISPOSITIF DE FIXATION

(43) Veröffentlichungstag der Anmeldung: 21.06.2017
(73) Patentinhaber: MTU Aero Engines AG, 80995 München (DE)
(72) Erfinder: Klötzer, Alexander, 82256 Fürstenfeldbruck (DE); Feldmann, Manfred, 82223 Eichenau (DE)

(56) Entgegenhaltungen:
- EP-A1- 1 598 566
- EP-A1- 1 717 481
- EP-A2- 2 543 828

## Beschreibung

Die vorliegende Erfindung betrifft eine Befestigungsanordnung mit einem Bauteilflansch, insbesondere einer Turbomaschine, sowie ein Verfahren zur Montage der Befestigungsanordnung.

Insbesondere bei Turbomaschinen werden zur Montage bzw. Befestigung häufig Stehbolzen verwendet, deren Kopf in einen Bauteilflansch eingeschraubt wird bzw. ist.

Eine bekannte Befestigungsanordnung und deren Montageverfahren offenbart die EP 1 717 481 A1.

Eine Aufgabe einer Ausführung der vorliegenden Erfindung ist es, die Befestigung bzw. Montage eines Bauteilflanschs, insbesondere einer Turbomaschine, zu verbessern.

Diese Aufgabe wird durch eine Befestigungsanordnung mit den Merkmalen des Anspruchs 1 bzw. ein Verfahren mit den Merkmalen des Anspruchs 11 gelöst. Vorteilhafte Ausführungsformen der Erfindung sind Gegenstand der Unteransprüche.

Nach einer Ausführung der vorliegenden Erfindung weist eine Befestigungsanordnung einen, insbesondere ringstegartigen, Bauteilflansch auf.

Der Bauteilflansch kann in einer Ausführung ein Bauteilflansch einer Turbomaschine, insbesondere einer Gasturbine, insbesondere eines Flugtriebwerks, sein. In einer Weiterbildung ist der Bauteilflansch an einem Gehäuseteil, einer Turbinen- oder Verdichterscheibe oder einem, insbesondere tragenden, Strukturelement der Turbomaschine angeordnet, insbesondere ausgebildet. Insbesondere bei solchen Bauteil(flansch)en ist die Verwendung einer hier beschriebenen Befestigung(sanordnung) vorteilhaft.

Nach einer Ausführung der vorliegenden Erfindung weist der Bauteilflansch eine oder mehrere, insbesondere längs (s)eines Umfangs, insbesondere äquidistant, verteilte Bohrungen, insbesondere Durchgangsbohrungen, auf. In einer Weiterbildung sind bzw. werden die eine oder mehreren Durchgangsbohrungen (jeweils) mit dem Bauteilflansch urgeformt oder materialabtragend, insbesondere spanend, in diesem hergestellt.

Nach einer Ausführung der vorliegenden Erfindung werden bzw. sind durch die Bohrung bzw. eine oder mehrere, insbesondere alle, der Bohrungen (jeweils wenigstens) ein Bolzen durchgesteckt bzw. ein- und teilweise hindurchgeführt, insbesondere so, dass der durchgesteckte Bolzen beidseitig aus der jeweiligen Bohrung hervorragt.

Vor dem Durchstecken, simultan mit dem Durchstecken oder insbesondere anschließend an das Durchstecken des (jeweiligen) Bolzens wird bzw. ist nach einer Ausführung der vorliegenden Erfindung (jeweils) eine Hülse in der Bohrung angeordnet, so dass nach dem Durchstecken und dem Anordnen der durch die Bohrung durchgesteckte Bolzen (auch) die in der Bohrung angeordnet Hülse durchgreift. Wenn zuerst der Bolzen durch die Bohrung gesteckt und dann erst die Hülse in der Bohrung angeordnet wird, hat dies den Vorteil, dass eine Montage auch bei engen Platzverhältnissen durchgeführt werden kann. So kann insbesondere der Bolzen schräg in die Bohrung eingeführt werden und auf diese Weise an der an dem axialen Anschlag vorbeigeführt werden. Die Hülse fixiert anschließend dann die Endlage des Bolzens, zumindest in Umfangsrichtung und in radialer Richtung.

Insbesondere wird also in einer Ausführung zunächst der Bolzen durch die (hülsenfreie) Bohrung durchgesteckt und anschließend die Hülse in der Bohrung angeordnet, so dass dabei der die Bohrung bereits durchgreifende Bolzen (nun auch) die Hülse durchgreift. Weniger bevorzugt, jedoch ebenfalls denkbar, zumindest wenn genügend Platz zur Verfügung steht, ist, dass zunächst die Hülse in der (bolzenfreien) Bohrung angeordnet und anschließend der Bolzen durch die Hülse und damit auch durch die Bohrung durchgesteckt wird. In einer weiteren Ausführung können Bolzen und Hülse auch simultan in die Bohrung eingeführt werden.

In einer Weiterbildung werden bzw. sind Bolzen und Hülse von gegenüberliegenden Seiten in die Bohrung eingeführt. Hierdurch kann in einer Ausführung insbesondere die Montage verbessert werden.

Nach einer Ausführung der vorliegenden Erfindung weist der Bolzen einen, insbesondere radial vorstehenden, Kopf auf, der (axial) zwischen einem Rand der Bohrung und einem bauteilflanschfesten axialen Anschlag, insbesondere mit oder ohne Axialspalt zwischen Kopf und Bohrungsrand und/oder Anschlag und/oder formschlüssig und/oder direkt bzw. unmittelbar oder indirekt bzw. mittelbar über ein oder mehrere Zwischenelemente, insbesondere Unterlegscheiben oder dergleichen, durch den Rand bzw. eine diesen umgebende Wand des Bauteilflanschs und/oder den Anschlag, axial gesichert ist bzw. wird, insbesondere wenn der Bolzen die in der Bohrung angeordnete Hülse durchgreift, insbesondere nur, wenn der Bolzen die in der Bohrung angeordnete Hülse durchgreift. "Axial" und "radial" beziehen sich vorliegend insbesondere auf eine (Längs)Achse des Bolzens bzw. (Bohrungs)Achse der Bohrung bzw. Hülse.

Durch den axialen Anschlag kann der Bolzen in einer Ausführung insbesondere bis zu und/oder während einem Verspannen des Bolzens, insbesondere mittels eines nachfolgen erläuterten Gegenhalters, verliergesichert sein bzw. werden und so insbesondere die Montage erleichtern.

Dabei kann eine Sicherung mit Axialspalt in einer Ausführung vorteilhaft die Montage des Bolzens und/oder die Demontage erleichtern und/oder Fertigungs- und/oder Montagetoleranzen und/oder thermische Verformungen kompensieren. Eine Sicherung ohne Axialspalt bzw. eine (axial)spielfreie axiale Sicherung kann in einer Ausführung vorteilhaft insbesondere den Bolzen reibschlüssig fixieren und so insbesondere die Montage des Gegenhalters erleichtern.

Durch die Hülse kann der Bolzen in einer Ausführung radial in der Bohrung zentriert sein bzw. werden, insbesondere in eine(r) radiale(n) Lage, in der der Kopf axial zwischen dem Rand der Bohrung und dem axialen Anschlag gesichert ist bzw. wird.

Hierdurch können in einer Ausführung vorteilhaft die Montage und/oder Demontage erleichtert und/oder Fertigungs- und/oder Montagetoleranzen kompensiert werden.

In einer Ausführung wird bzw. ist der axiale Anschlag nicht-zerstörungsfrei-lösbar, insbesondere stoffschlüssig, mit dem Bauteilflansch verbunden oder integral mit dem Bauteilflansch ausgebildet und/oder definiert mit einer gegenüberliegenden bohrungsseitigen Flanschwand eine Nut, in die der Kopf radial eingreift. In einer Weiterbildung ist bzw. wird der Kopf in dieser bzw. durch diese Nut mit oder ohne Axialspalt, insbesondere mit einer Spiel- oder Presspassung, axial gesichert, insbesondere formschlüssig und/oder direkt bzw. unmittelbar durch die einander axial gegenüberliegenden Nutflanken bzw. -wände oder indirekt bzw. mittelbar über ein oder mehrere Zwischenelemente, insbesondere Unterlegscheiben oder dergleichen, die (jeweils) axial zwischen dem Kopf und einer oder beiden Nutwand bzw. -flanke angeordnet sind bzw. werden.

Durch eine nicht-zerstörungsfrei-lösbare Verbindung des axialen Anschlags mit dem Bauteilflansch kann in einer Ausführung insbesondere die Ausbildung des Anschlags verbessert werden, durch eine integrale Ausbildung mit dem Bauteilflansch insbesondere eine bzw. die Festigkeit.

In einer Ausführung ist bzw. wird der axiale Anschlag nur im Bereich der zugeordneten Bohrung ausgebildet bzw. vorhanden, insbesondere in Form eines freistehenden Radialsteges oder dergleichen. Hierdurch kann insbesondere Material gespart werden. In einer anderen Ausführung kann der axiale Anschlag auch durch einen umlaufenden Ringsteg gebildet sein bzw. werden.

In einer Ausführung ist bzw. wird die Befestigungsanordnung (konstruktiv) derart ausgebildet, dass eine axiale Weite der Nut kleiner als ein axialer Abstand zwischen dem Kopf, insbesondere einer bohrungsseitigen Stirnseite des Kopfes, und einer kopfabgewandten Stirnseite des Bolzens ist. Hierdurch kann der Anschlag den Bolzen bzw. Kopf vorteilhaft formschlüssig axial sichern.

Zusätzlich oder alternativ ist bzw. wird die Befestigungsanordnung in einer Ausführung (konstruktiv) derart ausgebildet, dass eine Außenkontur des Kopfes des Bolzens eine Außenkontur des axialen Anschlags in wenigstens einer Dreh- bzw. Winkellage des Bolzens um seine (Längs)Achse wenigstens teilweise überdeckt bzw. die axialen Projektionen der beiden Außenkonturen einander schneiden, wenn der Bolzen die in der Bohrung angeordnete Hülse durchgreift. Hierdurch kann der Anschlag den Bolzen bzw. Kopf vorteilhaft formschlüssig axial sichern.

In einer Weiterbildung ist bzw. wird die Befestigungsanordnung (konstruktiv) derart ausgebildet, dass die Außenkontur des Kopfes die Außenkontur des axialen Anschlags in jeder Dreh- bzw. Winkellage des Bolzens um seine (Längs)Achse wenigstens teilweise überdeckt bzw. die axialen Projektionen der beiden Außenkonturen einander schneiden, wenn der Bolzen die in der Bohrung angeordnete Hülse durchgreift. Hierdurch kann der Anschlag den Bolzen bzw. Kopf vorteilhaft formschlüssig axial sichern.

In einer alternativen, weniger bevorzugten, Weiterbildung ist bzw. wird die Befestigungsanordnung (konstruktiv) derart ausgebildet, dass die Außenkontur des Kopfes die Außenkontur des axialen Anschlags in wenigstens einer anderen Dreh- bzw. Winkellage des Bolzens um seine (Längs)Achse nicht überdeckt bzw. die axialen Projektionen der beiden Außenkonturen einander nicht schneiden, wenn der Bolzen die in der Bohrung angeordnete Hülse durchgreift. Hierdurch kann der Bolzen bzw. Kopf bei einem konzentrischen Durchstecken, bei dem die (Längs)Achsen des Bolzens und der Bohrung miteinander fluchten, in der einen Drehlage den Anschlag passieren und anschließend durch Drehen um die (Längs)Achse in die andere Drehlage axial gesichert werden bzw. sein.

Entsprechend wird in einer Ausführung der Kopf nach dem Durchstecken des Bolzens durch die Bohrung durch Drehen um seine Achse zwischen dem Rand der Bohrung und dem axialen Anschlag axial gesichert, insbesondere in die Nut hineingedreht, insbesondere bevor oder nachdem die Hülse in der Bohrung angeordnet (worden) ist.

Insbesondere, wenn die Außenkontur des Kopfes des die in der Bohrung angeordneten Hülse durchgreifenden Bolzens die Außenkontur des axialen Anschlags in jeder Dreh- bzw. Winkellage wenigstens teilweise überdeckt, wird in einer Ausführung der Kopf nach dem Durchstecken des Bolzens durch die hülsenfreie Bohrung in der Bohrung zwischen dem Rand der Bohrung und dem axialen Anschlag durch ein bzw. das Zentrieren des Bolzens in der Bohrung durch die Hülse bzw. dadurch axial gesichert, dass die Hülse in der Bohrung angeordnet wird, durch die der Bolzen bereits durchgesteckt ist, und dabei den Bolzen zentriert. Insbesondere kann der Bolzen somit in einer Ausführung zunächst parallel zur Bohrungsachse, jedoch mit Achsversatz radial vom axialen Absatz weg, und/oder mit vom axialen Absatz weg gekipptem Kopf, durch die hülsenfreie Bohrung durchgesteckt und anschließend durch das Anordnen der Hülse in der Bohrung, so dass er die Hülse durchgreift, zentriert, insbesondere radial zum axialen Absatz hin verschoben und dadurch durch diesen axial gesichert werden, insbesondere in die Nut eingreifen. Entsprechend ist bzw. wird die Befestigungsanordnung in einer Ausführung (konstruktiv) derart ausgebildet, dass der Bolzen nur mit Achsversatz radial vom axialen Anschlag weg parallel zur Bohrungsachse und/oder mit vom axialen Anschlag weg gekipptem Kopf in die hülsenfreie Bohrung einführbar bzw. durch diese durchsteckbar ist.

In einer Ausführung ist bzw. wird ein kopfabgewandter Endabschnitt des Bolzens reib-, form- und/oder stoffschlüssig mit einem Gegenhalter, insbesondere einer Mutter oder einem weiteren Bauteil(flansch), verbunden, insbesondere verschraubt. In einer Weiterbildung ist bzw. wird der Bolzen hierdurch axial verspannt bzw. gedehnt.

Somit kann der Bolzen in einer Ausführung insbesondere analog zu einem Steckbolzen fungieren, ohne jedoch durch eine Verschraubung zwischen Bolzen und Bauteilflansch dessen Herstellung zu erschweren und/oder diesen kerbwirkungsbedingt zu schwächen.

Entsprechend ist bzw. wird in einer Ausführung die Bohrung innengewindefrei ausgebildet.

In einer Weiterbildung stützt sich der Gegenhalter axial, insbesondere direkt oder indirekt, über die Hülse ab, insbesondere an dem bzw. gegen den Bauteilflansch. Mit anderen Worten ist die Hülse in der Weiterbildung im Kraftfluss der Verspannung des Bolzens durch den Gegenhalter angeordnet. Insbesondere kann in einer Ausführung die Hülse durch den Bolzen und den damit verbundenen Gegenhalter gegen den Bauteilflansch gespannt sein bzw. werden. Dabei können zwischen dem Gegenhalter und der Hülse und/oder zwischen der Hülse und dem Bauteilflansch ein oder mehrere Zwischenelemente, insbesondere ein nachfolgend erläuterter Gegenbauteilflansch, Unterlegscheiben oder dergleichen, angeordnet sein bzw. werden. Gleichermaßen kann die Hülse den Gegenhalter und/oder den Bauteilflansch auch direkt kontaktieren. Hierdurch kann in einer Ausführung die Hülse vorteilhaft reibschlüssig fixiert sein bzw. werden.

In einer anderen Weiterbildung stützt sich der Gegenhalter axial nicht über die Hülse ab. Mit anderen Worten ist die Hülse in dieser Weiterbildung nicht im Kraftfluss der Verspannung des Bolzens durch den Gegenhalter angeordnet. Insbesondere kann in einer Ausführung die Hülse axial beweglich bzw. mit axialem Spiel zwischen dem Gegenhalter und dem Bauteilflansch angeordnet sein bzw. werden. Hierdurch können in einer Ausführung vorteilhaft Fertigungs- und/oder Montagetoleranzen und/oder thermische Verformungen kompensiert werden.

In einer Ausführung ist bzw. wird ein bzw. der Gegenbauteilflansch mit dem Bauteilflansch, insbesondere zerstörungsfrei lösbar, verbunden, indem der bzw. ein oder mehrere, insbesondere alle, der Bolzen (jeweils wenigstens) eine weitere Bohrung in dem Gegenbauteilflansch durchgreifen, wobei der Gegenbauteilflansch axial zwischen Bauteilflansch, insbesondere der bzw. den Hülse(n), und dem bzw. den Gegenhalter(n) angeordnet und in einer Weiterbildung durch den bzw. die Bolzen bzw. Gegenhalter verspannt ist bzw. wird, insbesondere, indem zunächst der bzw. die Bolzen durch die weitere(n) Bohrung(en) durchgesteckt und anschließend mit dem bzw. den Gegenhalter(n) verspannt, insbesondere verschraubt, ist/sind bzw. wird/werden.

In einer Ausführung ist bzw. wird die Hülse reib-, form- und/oder stoffschlüssig mit dem Bauteilflansch und/oder dem Bolzen verbunden, insbesondere verschraubt oder mit einer Presspassung in die Bohrung und/oder auf den Bolzen gesteckt. Hierdurch kann in einer Ausführung die Montage und/oder Demontage verbessert werden.

Zusätzlich oder alternativ ist bzw. wird die Hülse in einer Ausführung mit oder ohne radiales Bewegungsspiel in der Bohrung und/oder auf dem Bolzen angeordnet. Durch eine Anordnung mit radialem Bewegungsspiel können in einer Ausführung vorteilhaft Fertigungs- und/oder Montagetoleranzen und/oder thermische Verformungen kompensiert werden. Durch eine Anordnung ohne radiales Bewegungsspiel kann in einer Ausführung die Montage und/oder Demontage verbessert werden.

In einer Ausführung weist die Hülse einen Ringsteg auf, mit dem sie sich an dem Bauteilflansch, insbesondere einer dem Kopf des Bolzens gegenüberliegenden Seite, axial abstützt. Hierdurch kann in einer Ausführung die Montage und/oder Demontage verbessert werden.

In einer Ausführung steht die in der Bohrung angeordnete Hülse somit, insbesondere auf einer (bolzen)kopfabgewandten Seite des Bauteilflanschs, aus der Bohrung hervor. Zusätzlich oder alternativ stützt sich in einer Ausführung der Kopf des Bolzens, insbesondere in einem durch den Gegenhalter verspannten (Montage)Zustand, direkt oder über ein oder mehrere Zwischenelemente wie Unterlegscheiben oder dergleichen, an der bohrungsseitigen Flanschwand ab.

In einer Ausführung weist der Kopf eine eckige, insbesondere drei-, vier-, fünf-, sechs-, acht- oder mehreckige, Außenkontur auf, in einer anderen Ausführung eine kreisförmige. Jedoch ist eine kreisförmige Außenkontur weniger bevorzugt, da hierdurch keine Verdrehsicherung erzielt werden kann.

Weitere vorteilhafte Weiterbildungen der vorliegenden Erfindung ergeben sich aus den Unteransprüchen und der nachfolgenden Beschreibung bevorzugter Ausführungen. Hierzu zeigt, teilweise schematisiert:
- Fig. 1: einen Teil einer Befestigungsanordnung nach einer Ausführung der vorliegenden Erfindung in einem Schnitt;
- Fig. 2: den Teil der Befestigungsanordnung in perspektivischer Ansicht;
- Fig. 3;: einen Schritt eines Verfahrens zur Montage der Befestigungsanordnung nach einer Ausführung der vorliegenden Erfindung; und
- Fig. 4: einen weiteren Schritt des Verfahrens.

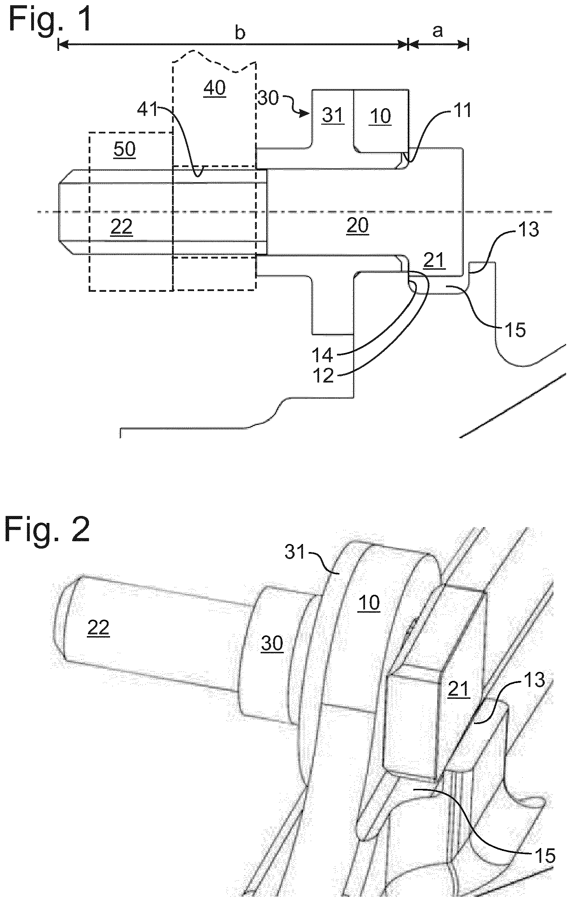

Fig. 1 zeigt einen Teil einer Befestigungsanordnung mit einem Bauteilflansch 10 nach einer Ausführung der vorliegenden Erfindung in einem Schnitt, Fig. 2 den Teil der Befestigungsanordnung in perspektivischer Ansicht.

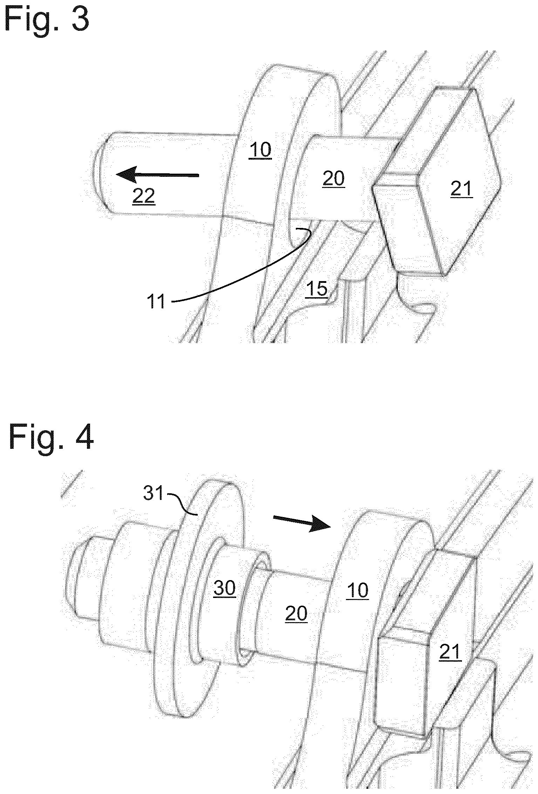

Fig. 3, 4 zeigen zwei Schritte eines Verfahrens zur Montage der Befestigungsanordnung nach einer Ausführung der vorliegenden Erfindung.

Der Bauteilflansch 10 weist wenigstens eine im Ausschnitt der Fig. 1 - 4 liegende Durchgangsbohrung 11 auf.

Durch diese wird, wie in Fig. 3 durch einen Bewegungspfeil angedeutet, ein Bolzen 20 durchgesteckt. Der Bolzen 20 weist einen Kopf 21 auf.

Dabei sind Bolzen 20, insbesondere sein Kopf 21, Bohrung 11 und axialer Anschlag 13, wie insbesondere aus Fig. 1 ersichtlich, konstruktiv derart ausgebildet, dass der Bolzen 20 nur azentrisch in die hülsenfreie Bohrung 11 eingeführt und durch diese durchgesteckt werden kann, wobei die (Längs)Achse des Bolzens 20 radial vom axialen Absatz 13 weg (nach oben in Fig. 1) parallel zur (Längs)Achse der Bohrung 11 versetzt ist und der Kopf 21 beim Durchstecken den axialen Anschlag 13 passiert.

Anschließend wird, wie in Fig. 4 durch einen Bewegungspfeil angedeutet, eine Hülse 30 in der Bohrung 10 angeordnet, so dass nach dem Durchstecken und dem Anordnen der durch die Bohrung 11 durchgesteckte Bolzen 20 auch die in der Bohrung 11 angeordnet Hülse 30 durchgreift.

Hierdurch zentriert die Hülse 30 den Bolzen 20 radial in der Bohrung 11 (vertikal nach unten in Fig. 1). Dabei wird der Kopf 21 zwischen einem Rand 12 der Bohrung 11 und einem bauteilflanschfesten axialen Anschlag 13 axial gesichert, welcher integral mit dem Bauteilflansch 10 ausgebildet ist und mit einer gegenüberliegenden bohrungsseitigen Flanschwand 14 eine Nut 15 definiert, in die der Kopf 21 radial eingreift und so axial gesichert ist bzw. wird.

Anschließend kann ein nur in Fig. 1 gestrichelt und teilweise angedeuteter Gegenbauteilflansch 40 mit dem Bauteilflansch 10 zerstörungsfrei lösbar verbunden werden, indem der Bolzen 20 eine weitere Bohrung 41 in dem Gegenbauteilflansch 40 durchgreift und ein kopfabgewandter Endabschnitt 22 des Bolzens 20 mit einem Gegenhalter in Form einer ebenfalls nur in Fig. 1 gestrichelt angedeuteten Mutter 50 verschraubt und hierdurch axial verspannt bzw. gedehnt wird, so dass der Gegenbauteilflansch 40 axial zwischen Bauteilflansch 10, insbesondere der Hülse 30, und der Mutter 50 angeordnet und durch den Bolzen 20 verspannt ist bzw. wird.

Im Ausführungsbeispiel stützt sich der Gegenhalter in Form der Mutter 50 axial über den Gegenbauteilflansch 40 und die Hülse 30 am bzw. gegen den Bauteilflansch 10 ab, so dass die Hülse 30 im Kraftfluss der Verspannung des Bolzens 10 durch den Gegenhalter 50 angeordnet ist.

Die Hülse 30 weist einen Ringsteg 31 auf, mit dem sie sich an dem Bauteilflansch 10 axial abstützt.

Obwohl in der vorhergehenden Beschreibung exemplarische Ausführungen erläutert wurden, sei darauf hingewiesen, dass eine Vielzahl von Abwandlungen möglich ist.

So wurde in Fig. 1-4 insbesondere nur ein Bolzen 20 gezeigt. Es versteht sich, dass weitere in Umfangsrichtung des Bauteilflansches 10 verteilte Bolzen in analoger Weise vorgesehen, insbesondere entsprechende Bohrungen und Hülsen durchgreifen und mit Muttern verschraubt sein bzw. werden können.

Anstelle der Mutter(n) 50 kann der (Endabschnitt 22 des) Bolzen(s) 20 in einer Abwandlung auch direkt mit bzw. in dem Gegenbauteilflansch 40, insbesondere einem Innengewinde der Bohrung 41, verschraubt werden bzw. sein.

Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen ergibt.

### Bezugszeichenliste

- 10: Bauteilflansch
- 11: Bohrung
- 12: Bohrungsrand
- 13: axialer Anschlag
- 14: Flanschwand
- 15: Nut
- 20: Bolzen
- 21: Kopf
- 22: Endabschnitt
- 30: Hülse
- 31: Ringsteg
- 40: Gegenbauteilflansch
- 41: weitere Bohrung
- 50: Mutter (Gegenhalter)
- a: axiale Weite der Nut
- b: axialer Abstand zwischen Kopf und kopfabgewandter Stirnseite des Bolzens

## Patentansprüche

1. Befestigungsanordnung mit einem Bauteilflansch (10), insbesondere einer Turbomaschine, mit wenigstens einer Bohrung (11), in der eine Hülse (30) angeordnet ist, die ein Bolzen (20) durchgreift, welcher einen Kopf (21) aufweist, der zwischen einem Rand (12) der Bohrung und einem bauteilflanschfesten axialen Anschlag (13) axial gesichert ist.

2. Befestigungsanordnung nach dem vorhergehenden Anspruch, **dadurch gekennzeichnet, dass** der axiale Anschlag nicht-zerstörungsfrei-lösbar mit dem Bauteilflansch verbunden oder integral mit dem Bauteilflansch ausgebildet ist und/oder mit einer bohrungsseitigen Flanschwand (14) eine Nut (15) definiert, in die der Kopf radial eingreift.

3. Befestigungsanordnung nach dem vorhergehenden Anspruch, **dadurch gekennzeichnet, dass** eine axiale Weite (a) der Nut kleiner als ein axialer Abstand (b) zwischen dem Kopf und einer kopfabgewandten Stirnseite des Bolzens ist.

4. Befestigungsanordnung nach einem der vorhergehenden Ansprüche, **dadurch gekennzeichnet, dass** eine Außenkontur des Kopfes des die in der Bohrung angeordnete Hülse durchgreifenden Bolzens eine Außenkontur des axialen Anschlags in wenigstens einer Drehlage des Bolzens wenigstens teilweise überdeckt.

5. Befestigungsanordnung nach dem vorhergehenden Anspruch, **dadurch gekennzeichnet, dass** die Außenkontur des Kopfes die Außenkontur des axialen Anschlags in jeder Drehlage des Bolzens wenigstens teilweise überdeckt oder in wenigstens einer anderen Drehlage des Bolzens nicht überdeckt.

6. Befestigungsanordnung nach einem der vorhergehenden Ansprüche, **dadurch gekennzeichnet, dass** ein kopfabgewandter Endabschnitt (22) des Bolzens reib-, form- und/oder stoffschlüssig mit einem Gegenhalter (50) verbindbar, insbesondere verschraubbar ist.

7. Befestigungsanordnung nach dem vorhergehenden Anspruch, **dadurch gekennzeichnet, dass** der Gegenhalter sich über die Hülse oder nicht über die Hülse an dem Bauteilflansch axial abstützen kann.

8. Befestigungsanordnung nach einem der vorhergehenden Ansprüche, **gekennzeichnet durch** einen Gegenbauteilflansch (40) mit wenigstens einer weiteren Bohrung (41), die der Bolzen durchgreifen kann, wobei der Gegenbauteilflansch axial zwischen dem Bauteilflansch und dem Gegenhalter angeordnet, insbesondere durch den Bolzen verspannt, sein kann.

9. Befestigungsanordnung nach einem der vorhergehenden Ansprüche, **dadurch gekennzeichnet, dass** die Hülse reib-, form- und/oder stoffschlüssig mit dem Bauteilflansch und/oder Bolzen verbunden, insbesondere verschraubt, und/oder mit oder ohne radiales Bewegungsspiel in der Bohrung und/oder auf dem Bolzen angeordnet ist.

10. Befestigungsanordnung nach dem vorhergehenden Anspruch, **dadurch gekennzeichnet, dass** der Bauteilflansch an einem Gehäuseteil, einer Turbinen- oder Verdichterscheibe oder einem, insbesondere tragenden, Strukturelement der Turbomaschine, insbesondere einer Gasturbine, angeordnet ist.

11. Verfahren zur Montage einer Befestigungsanordnung nach einem der vorhergehenden Ansprüche, mit den Schritten:
Durchstecken des wenigstens einen Bolzens (20) durch die Bohrung (11) des Bauteilflanschs (10); und zuvor, simultan oder anschließend Anordnen der Hülse (30) in der Bohrung;
wobei der durch die Bohrung durchgesteckte Bolzen die in der Bohrung angeordnet Hülse durchgreift und sein Kopf (21) zwischen einem Rand (12) der Bohrung und dem bauteilflanschfesten axialen Anschlag (13) axial gesichert wird.

12. Verfahren nach dem vorhergehenden Anspruch, **dadurch gekennzeichnet, dass** der Kopf nach dem Durchstecken des Bolzens durch die Bohrung zwischen dem Rand der Bohrung und dem axialen Anschlag durch Drehen um seine Achse und/oder Zentrieren des Bolzens in der Bohrung durch die Hülse axial gesichert wird.

13. Verfahren nach einem der vorhergehenden Ansprüche, **dadurch gekennzeichnet, dass** der kopfabgewandter Endabschnitt (22) des Bolzens reib-, form- und/oder stoffschlüssig mit dem Gegenhalter (50) verbunden, insbesondere verschraubt wird.

14. Verfahren nach einem der vorhergehenden Ansprüche, **dadurch gekennzeichnet, dass** der Gegenbauteilflansch (40) axial zwischen dem Bauteilflansch und dem Gegenhalter angeordnet, insbesondere verspannt, wird, wobei der Bolzen die weitere Bohrung (41) des Gegenbauteilflanschs durchgreift.

15. Verfahren nach einem der vorhergehenden Ansprüche, **dadurch gekennzeichnet, dass** die Hülse reib-, form- und/oder stoffschlüssig mit dem Bauteilflansch und/oder Bolzen verbunden, insbesondere verschraubt, und/oder mit oder ohne radiales Bewegungsspiel in der Bohrung und/oder auf dem Bolzen angeordnet wird.

## Claims

1. Fastening arrangement comprising a component flange (10), in particular of a turbomachine, comprising at least one bore (11) in which a sleeve (30) is arranged through which a bolt (20) passes that has a head (21) which is axially secured between an edge (12) of the bore and an axial stop (13) that is fixed to the component flange.

2. Fastening arrangement according the preceding claim, **characterized in that** the axial stop is connected to the component flange such that it cannot be detached without breaking, or is integral with the component flange, and/or defines a groove (15) with a bore-side flange wall (14), into which groove the head radially engages.

3. Fastening arrangement according to the preceding claim, **characterized in that** an axial width (a) of the groove is smaller than an axial distance (b) between the head and an end face of the bolt that is remote from the head.

4. Fastening arrangement according to any of the preceding claims, **characterized in that** an outer contour of the head of the bolt passing through the sleeve arranged in the bore at least partly covers an outer contour of the axial stop in at least one rotational position of the bolt.

5. Fastening arrangement according to the preceding claim, **characterized in that** the outer contour of the head at least partly covers the outer contour of the axial stop in each rotational position of the bolt, or does not cover same in at least one other rotational position of the bolt.

6. Fastening arrangement according to any of the preceding claims, **characterized in that** an end portion (22) of the bolt that is remote from the head can be frictionally or form-fittingly connected and/or integrally bonded, in particular screwed, to a mating holder (50).

7. Fastening arrangement according to the preceding claim, **characterized in that** the mating holder can be axially supported against the component flange by means of the sleeve or not by means of the sleeve.

8. Fastening arrangement according to any of the preceding claims, **characterized by** a mating component flange (40) comprising at least one further bore (41) through which the bolt can pass, it being possible for the mating component flange to be arranged axially, in particular braced by the bolt, between the component flange and the mating holder.

9. Fastening arrangement according to any of the preceding claims, **characterized in that** the sleeve is frictionally or form-fittingly connected and/or integrally bonded, in particular screwed, to the component flange and/or bolt, and/or is arranged in the bore and/or on the bolt with or without radial movement clearance.

10. Fastening arrangement according to the preceding claim, **characterized in that** the component flange is arranged on a housing part, a turbine or compressor disk, or an in particular supporting structural element of the turbomachine, in particular a gas turbine.

11. Method for assembling a fastening arrangement according to any of the preceding claims, comprising the following steps:
inserting the at least one bolt (20) through the bore (11) in the component flange (10); and
previously, simultaneously or subsequently arranging the sleeve (30) in the bore;
wherein the bolt inserted through the bore passes through the sleeve arranged in the bore and its head (21) is axially secured between an edge (12) of the bore and the axial stop (13) that is axially fixed to the component flange.

12. Method according to the preceding claim, **characterized in that**, after inserting the bolt through the bore, the head is axially secured between the edge of the bore and the axial stop by rotating about its axis and/or centering the bolt in the bore by means of the sleeve.

13. Method according to any of the preceding claims, **characterized in that** the end portion (22) of the bolt that is remote from the head is frictionally or form-fittingly connected and/or integrally bonded, in particular screwed, to the mating holder (50).

14. Method according to any of the preceding claims, **characterized in that** the mating component flange (40) is axially arranged, in particular braced, between the component flange and the mating holder, the bolt passing through the further bore (41) in the mating component flange.

15. Method according to any of the preceding claims, **characterized in that** the sleeve is frictionally or form-fittingly connected and/or integrally bonded, in particular screwed, to the component flange and/or bolt, and/or is arranged in the bore and/or on the bolt with or without radial movement clearance.

## Revendications

1. Dispositif de fixation doté d'une bride de composant (10), en particulier d'une turbomachine, comportant au moins un alésage (11), dans lequel est disposé un manchon (30) qui traverse un boulon (20) présentant une tête (21) fixée axialement entre un bord (12) de l'alésage et une butée axiale (13) fixée sur la bride de composant.

2. Dispositif de fixation selon la revendication précédente, **caractérisé en ce que** la butée axiale non démontable est reliée de manière amovible à la bride de composant ou formée d'une seule pièce avec la bride de composant et/ou forme une rainure (15) avec une paroi de bride (14) côté alésage, dans laquelle la tête s'intégre radialement.

3. Dispositif de fixation selon la revendication précédente, **caractérisé en ce qu'**une largeur axiale (a) de la rainure est inférieure à une distance axiale (b) entre la tête et une face frontale du boulon opposée à la tête.

4. Dispositif de fixation selon l'une des revendications précédentes, **caractérisé en ce qu'**un contour extérieur de la tête du boulon traversant le manchon disposé dans l'alésage recouvre au moins partiellement un contour extérieur de la butée axiale dans au moins une position rotative du boulon.

5. Dispositif de fixation selon la revendication précédente, **caractérisé en ce que** le contour extérieur de la tête recouvre au moins partiellement le contour extérieur de la butée axiale dans chaque position de rotation du boulon ou ne le recouvre pas dans au moins une autre position de rotation du boulon.

6. Dispositif de fixation selon l'une des revendications précédentes, **caractérisé en ce qu'**une partie d'extrémité (22) du boulon opposée à la tête peut être reliée, en particulier vissée, par friction, par engagement positif et/ou par adhérence de matière, à un contre-support (50).

7. Dispositif de fixation selon la revendication précédente, **caractérisé en ce que** le contre-support peut s'appuyer axialement sur la bride de composant par le biais ou non du manchon.

8. Dispositif de fixation selon l'une des revendications précédentes, **caractérisé par** une contre-bride de composant (40) dotée d'au moins un alésage supplémentaire (41) à travers lequel le boulon peut passer, la contre-bride de composant pouvant être disposée axialement, en particulier serrée par le boulon, entre la bride de composant et le contre-support.

9. Dispositif de fixation selon l'une des revendications précédentes, **caractérisé en ce que** le manchon est relié par friction, par engagement positif et/ou par adhérence de matière, en particulier par vissage, à la bride de composant et ou au boulon et/ou disposé avec ou sans jeu de mouvement radial dans l'alésage et/ou sur le boulon.

10. Dispositif de fixation selon la revendication précédente, **caractérisé en ce que** la bride de composant est disposée sur une partie de boîtier, un disque de turbine ou de compresseur ou un élément de structure, en particulier un élément de structure porteur, de la turbomachine, en particulier une turbine à gaz.

11. Procédé d'assemblage d'un dispositif de fixation selon l'une des revendications précédentes, comprenant les étapes suivantes :
L'insertion d'au moins un boulon (20) à travers l'alésage (11) de la bride de composant (10) ; et
avant, pendant ou après l'agencement du manchon (30) dans l'alésage ;
selon le procédé, le boulon inséré à travers l'alésage traverse le manchon disposé dans l'alésage et sa tête (21) est fixée axialement entre un bord (12) de l'alésage et la butée axiale (13) fixée sur la bride de composant.

12. Procédé selon la revendication précédente, **caractérisé en ce que** la tête est fixée axialement par rotation autour de son axe et/ou centrage du boulon dans l'alésage par le manchon après insertion du boulon dans l'alésage entre le bord de l'alésage et la butée axiale.

13. Procédé selon l'une des revendications précédentes, **caractérisé en ce que** la partie d'extrémité (22) du boulon opposée à la tête est reliée, en particulier vissée, par friction, par engagement positif et/ou par adhérence de matière, à un contre-support (50).

14. Procédé selon l'une des revendications précédentes, **caractérisé en ce que** la contre-bride de composant (40) est disposée, en particulier serrée, axialement entre la bride de composant et le contre-support, le boulon passant par l'alésage supplémentaire (41) de la contre-bride de composant.

15. Procédé selon l'une des revendications précédentes, **caractérisé en ce que** le manchon est relié par friction, par engagement positif et/ou par adhérence de matière, en particulier par vissage, à la bride de composant et ou au boulon et/ou disposé avec ou sans jeu de mouvement radial dans l'alésage et/ou sur le boulon.
